# DEMANDE DE BREVET EUROPEEN

(11) **EP 1 449 694 A1**
(43) Date de publication de la demande: **25.08.2004**
(21) Numéro de dépôt: 04364007.7
(22) Date de dépôt: 10.02.2004
(51) Int. Cl.: B60J 1/20

(54) **Store pour véhicule automobile, à écran non rectangulaire et enjovileurs coulissants, et véhicule automobile correspondant**

(30) Priorité: 13.02.2003 FR 0301770
(71) Demandeur: WAGON SAS, 79300 Bressuire (FR)
(72) Inventeur: Moreau, Stéphane, 49300 Le Puy Saint Bonnet (FR)
(74) Mandataire: Bioret, Ludovic

(57) **Abrégé**

L'invention concerne un store présentant une barre de tirage (13) guidée dans deux rails non parallèles (17, 18) et permettant l'enroulement et le déroulement d'un écran d'occultation (12), ladite barre de tirage (13) comprenant au moins un élément coulissant (15, 16), de façon à compenser la variation de l'écartement entre lesdits rails, chacun desdits éléments coulissants porte un enjoliveur (26) monté fixe par rapport audit élément coulissant, coopérant avec un enjoliveur principal (27) monté sur ladite barre de tirage pour recouvrir une fente de passage dudit écran d'occultation, lorsque celui-ci est en position repliée, et s'étendant au moins partiellement au dessus de ladite barre de tirage, en position déployée.

## Description

Le domaine de l'invention est celui des stores, notamment pour véhicule automobile. Plus précisément, l'invention concerne les stores à écran amovible, destiné à être déployé pour occulter une baie non rectangulaire, et circulant dans une fente, ménagée par exemple dans la tablette arrière d'un véhicule, ou dans un boîtier prévu à cet effet.

L'invention concerne notamment les stores à enrouleur, mais d'autres modes de repliement de la toile peuvent, bien sûr, être mis en oeuvre (tels que par exemple un repliement de la toile suivant des plis préformés).

Classiquement, un store à enrouleur présente une toile, ou rideau, formant écran, en position déployée, devant une baie vitrée. La toile est susceptible d'être déroulée ou enroulée au travers d'une fente ménagée dans l'habillage intérieur ou la tablette arrière d'un véhicule.

Une des extrémités de la toile est montée sur un rouleau, ou tube enrouleur, mobile en rotation. L'autre extrémité de la toile est munie d'une barre de tirage.

Selon une technique particulière, à laquelle s'applique l'invention, la barre de tirage est solidaire de deux patins reliés ou montés à ses extrémités, et qui circulent dans des rails pour guider la barre de tirage, et par conséquent la toile d'occultation, entre sa position déployée et sa position repliée. Ce déplacement peut être manuel ou motorisé.

En position repliée, la toile est essentiellement enroulée autour du tube d'enroulement, et la barre de tirage vient, par exemple, en appui sur l'habillage intérieur ou sur la tablette arrière du véhicule. Dans ce cas, cette barre de tirage est en général conçue pour occulter la fente dans laquelle circule la toile. Elle peut ainsi porter un enjoliveur, dont les bords viennent prendre appui sur la tablette.

En effet, il est souhaitable d'occulter cette fente, tant pour des raisons évidentes d'esthétique, que pour éviter que de la poussière et de petits objets pénètrent dans le boîtier par la fente de guidage, risquant de bloquer ou détériorer l'ensemble du mécanisme.

Cependant, dans de nombreux cas, et par exemple pour les vitres arrière de la plupart des véhicules actuels, la baie, et par voie de conséquence la toile, présentent une forme non rectangulaire, et souvent trapézoïdale. La forme de la toile peut plus généralement être quelconque, notamment en fonction de la forme de la baie à occulter. Plus précisément, le côté de la toile relié au rouleau (par exemple la base du trapèze) est souvent plus grand que le côté relié à la barre de tirage.

Selon la technique à laquelle s'applique l'invention, les rails ne sont eux-mêmes pas parallèles. On prévoit alors des éléments coulissants, solidaires des patins et pouvant se déplacer en translation par rapport au corps de la barre de tirage. On forme ainsi une barre de tirage télescopique, s'adaptant à l'écartement variable des rails.

Dans ce cas, bien entendu, la barre de tirage a une longueur égale à (ou voisine de) celle de ce côté relié à la barre de tirage, et l'enjoliveur qu'elle porte ne peut donc pas obturer complètement la fente : deux ouvertures restent, de part et d'autre de cet enjoliveur, lorsqu'il vient couvrir la fente.

Cela n'est bien sûr pas acceptable, pour les raisons d'esthétique et de protection du mécanisme déjà mentionnées.

Pour pallier ce problème, on a proposé des systèmes formant capot venant recouvrir l'ensemble de la fente et la barre de tirage. Toutefois, ces capots entraînent une augmentation de la complexité et de l'encombrement du store.

On peut également envisager des capots adaptés pour obturer sélectivement chacune des deux ouvertures latérales. Mais cela suppose un mécanisme complexe et précis, et donc coûteux.

L'invention a notamment pour objectif de pallier ces inconvénients de l'art antérieur.

Plus précisément, l'invention a notamment pour objectif de fournir un store adapté à l'occultation d'une baie non rectangulaire, et par exemple trapézoïdale, et permettant une occultation efficace et totale de la fente de circulation de la toile.

Un autre objectif de l'invention est de fournir un tel store, qui ne nécessite pas d'éléments d'occultation indépendants du store, tels qu'un ou plusieurs capots.

Encore un autre objectif de l'invention est de fournir un tel store, qui reste aisé à fabriquer et à monter, avec un coût de revient raisonnable.

Un autre objectif de l'invention est de fournir un tel store, qui présente de bonnes qualités esthétiques (intégration dans le véhicule, faible encombrement,...), ergonomiques, et de confort (absence de bruits intempestifs notamment).

Ces objectifs, ainsi que d'autres qui apparaîtront par la suite, sont atteints à l'aide d'un store présentant une barre de tirage guidée dans deux rails non parallèles et permettant l'enroulement et le déroulement d'un écran d'occultation, ladite barre de tirage comprenant au moins un élément coulissant, de façon à compenser la variation de l'écartement entre lesdits rails. Selon l'invention, chacun desdits éléments coulissants porte un enjoliveur monté fixe par rapport audit élément coulissant, coopérant avec un enjoliveur principal monté sur ladite barre de tirage pour recouvrir une fente de passage dudit écran d'occultation, lorsque celui-ci est en position repliée, et s'étendant au moins partiellement au dessus de ladite barre de tirage, en position déployée.

Ainsi, il est possible de fermer simplement, efficacement et de façon fiable la fente, sans qu'un capot soit nécessaire. Il est à noter cependant que cette solution n'est pas évidente, l'homme du métier considérant que l'élément coulissant doit être dissimulé intégralement, ou à tout le moins le plus possible, et que tout élément rapporté pourrait nuire au bon coulissement.

De façon avantageuse, chacun desdits éléments coulissants comprend des premiers moyens de guidage en translation coopérant avec des seconds moyens de guidage prévus sur ladite barre de tirage ou sur ledit enjoliveur principal.

Lesdits premiers, respectivement seconds, moyens de guidage peuvent notamment comprendre au moins un ergot, et en ce que lesdits seconds, respectivement premiers, moyens de guidage comprennent au moins une fente dans laquelle circule au moins un desdits ergots.

Préférentiellement, dans ce cas, au moins un desdits ergots comprend au moins un élément anti-soulèvement, empêchant ledit ergot de sortir de la fente dans laquelle il circule. Ainsi, selon un mode de réalisation particulier, l'extrémité dudit ergot présente un renflement de largeur supérieure à la largeur de ladite fente.

Selon un autre aspect avantageux de l'invention, le ou lesdits enjoliveurs coulissants sont clipsés sur ledit élément coulissant.

Préférentiellement, le ou lesdits enjoliveurs coulissants présentent une surface principale de recouvrement sensiblement parallèle à ladite barre de tirage et, sur au moins une partie de la périphérie de ladite surface principale, un rebord sensiblement perpendiculaire à ladite surface principale.

Ces rebords peuvent notamment dissimuler les jeux de fonctionnement éventuels. Selon un autre mode de réalisation, ils peuvent également servir à guider le coulissement.

De façon avantageuse, le ou lesdits enjoliveurs coulissants portent au moins un élément de contact venant s'interposer entre le corps dudit enjoliveur coulissant et ledit enjoliveur principal.

Cela permet notamment d'éviter les rayures sur ce dernier, et de faciliter le coulissement.

Avantageusement, au moins un desdits éléments de contact est une lèvre réalisée en matériau souple.

De façon préférentielle, le ou lesdits éléments de contact s'étendent au moins au voisinage de la partie de l'enjoliveur la plus éloignée du rail correspondant.

L'invention concerne également les véhicules automobiles comprenant au moins un tel store, par exemple pour occulter la vitre arrière.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B illustrent schématiquement un store à toile trapézoïdale, respectivement en position déployée et en position repliée, mettant en oeuvre la technique de l'invention ;
- la figure 2 est une vue en coupe d'une partie de la barre de tirage du store des figures 1A et 1B, et d'un des enjoliveurs coulissants;
- la figure 3 présente une vue de dessous de l'enjoliveur coulissant de la figure 2 ;
- la figure 4 montre l'enjoliveur coulissant et la barre de tirage, lorsque le store est en position repliée ;
- la figure 5 montre l'enjoliveur coulissant et la barre de tirage dans la position déployée du store ;
- la figure 6 est une vue en coupe d'une section de l'enjoliveur coulissant et de la barre de tirage.

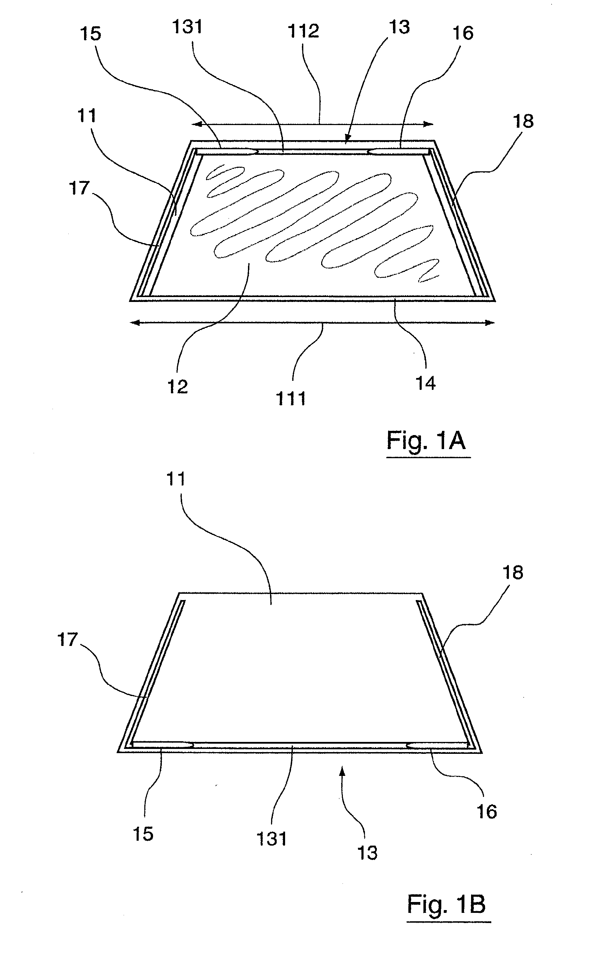

L'invention concerne donc un store destiné à occulter une surface vitrée d'un véhicule automobile qui est non rectangulaire, et par exemple trapézoïdale, ainsi que cela est illustré par les figures 1A et 1B. Sur ces figures, on a représenté une vitre arrière d'un véhicule, de forme trapézoïdale, le côté inférieur 111 étant de largeur supérieure à la largeur de côté supérieur 112.

Pour occulter de façon optimale cette surface vitrée trapézoïdale, la toile 12 doit bien sûr avoir une forme une forme similaire. Cela suppose que la barre de tirage est d'une longueur correspondant à celle du petit côté du trapèze définie par la toile, alors que la fente 14 permettant le passage de la toile sous la tablette arrière doit avoir une longueur correspondant à la largeur du grand côté de ce trapèze.

La barre de tirage 13 est solidaire de patins circulant dans des rails 17, 18 montés sur la structure et/ou la garniture du véhicule. Ces rails 17 et 18 suivent également la forme trapézoïdale de la vitre, et ne sont donc pas parallèles. La variation d'écartement entre ces rails est compensée, de façon connue, par l'utilisation d'éléments d'extrémité coulissants, pour former une barre télescopique.

En conséquence, et ainsi que cela apparaît sur la figure 1B, l'enjoliveur principal 131 monté classiquement sur la barre de tirage 13 ne recouvre pas intégralement la fente 14, lorsque la toile est repliée.

Pour cette raison, on a généralement proposé des systèmes selon lesquels la barre de tirage (non équipée d'un enjoliveur) pénètre complètement à l'intérieur de la fente, celle-ci étant ensuite fermée par un capot prévu spécifiquement à cet effet.

L'invention propose une autre solution, simple et efficace, consistant à équiper les éléments coulissants (qui sont généralement conçus pour rester invisibles, ou à tout le moins le moins visibles possible) d'enjoliveurs coulissants 15 et 16, qui recouvrent, en position repliée (figure 1B) du store, les parties extrêmes de la fente 14 non couverte par la barre de tirage 13, et qui viennent chevaucher l'enjoliveur principal 131 dans la position dépliée (figure lA).

En position repliée, la fente 14 est donc recouverte par la combinaison de trois enjoliveurs : l'enjoliveur principal 131, fixe par rapport à la barre de tirage, et les deux enjoliveurs coulissants 15 et 16.

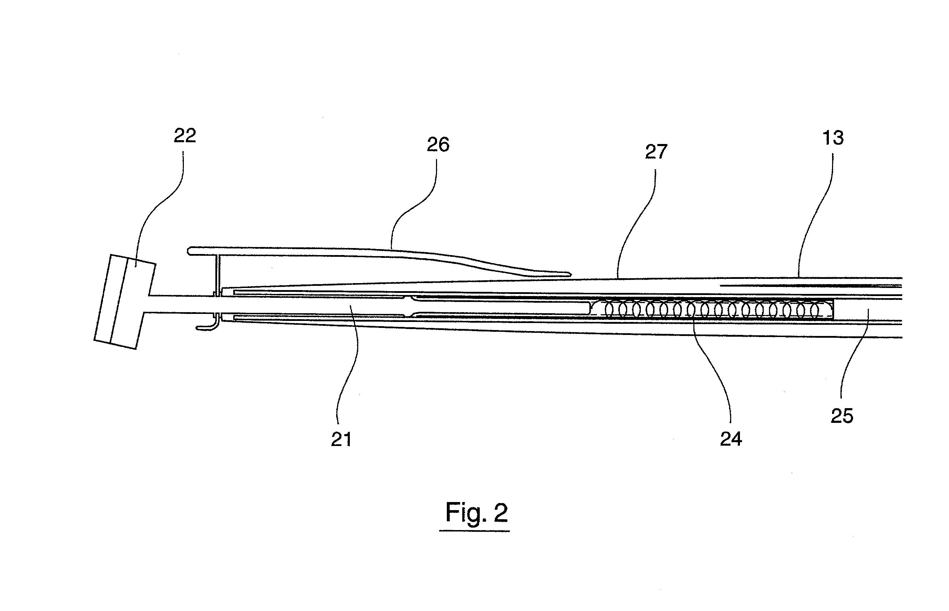

Ces enjoliveurs 15 et 16 sont donc montés de façon fixe sur des éléments coulissants, pouvant pénétrer à l'intérieur de la barre de tirage, dont l'extrémité est solidaire d'un patin coulissant dans les rails 17, 18 prévus à cet effet. On rappelle que le principe de fonctionnement de ces éléments coulissants est connu en soi. Il est également illustré schématiquement en figure 2, qui présente une vue en coupe de ce système.

Le principe est de former un ensemble télescopique, de façon à absorber les variations de longueur que doit prendre la barre de tirage lors de son évolution entre deux rails 16 et 17 non parallèles, tout en conservant la symétrie de l'ensemble du système.

Cet ensemble télescopique comprend donc la barre de tirage 13, ou plus précisément le corps principal de la barre de tirage, à l'intérieur de laquelle, deux embouts coulissants 21 sont montés. L'extrémité extérieure de cet embout coulissant 21 est fixée, ou intègre un patin 22 (ou un élément similaire fonctionnellement, comme une roulette), prévu pour coulisser dans l'un des rails. L'autre extrémité pénètre à l'intérieur d'un logement prévu à cet effet dans la barre de tirage 13.

Le coulissement des embouts coulissants peut être libre, et guidé simplement par les rails. Avantageusement cependant, on prévoit des moyens de rappel visant à assurer la transmission des efforts, ainsi que le plaquage des patins dans les rails, de façon notamment à éviter les bruits de frottement.

On peut ainsi prévoir un ressort 24 monté entre un tampon central 25 prévu dans la barre de tirage 13 et chaque embout 21. Ce tampon central 25 permet d'équilibrer les efforts transmis par les deux ressorts. On peut également prévoir un ressort unique reliant les deux embouts (le tampon central étant alors supprimé).

Le logement prévu à l'intérieur du corps de la barre contient donc le tampon central 25 et les ressorts 24, ainsi qu'une portion des embouts coulissants 21, dont l'autre extrémité est reliée aux patins de tirage 22. Les patins de tirage sont entraînés en translation par exemple par des câbles de commande du store, et la longueur formée par la barre de tirage et les embouts s'ajuste automatiquement, par le coulissement de ces embouts dans le logement. Les ressorts et le tampon équilibrent les efforts.

Selon l'invention, l'embout 21 est donc équipé d'un enjoliveur 26, qui coulisse sur la partie supérieure 27 de l'enjoliveur principal 131 de la barre de tirage. Ainsi, en position repliée, la fente du mécanisme est intégralement couverte par les deux enjoliveurs coulissants 26 et l'enjoliveur principal 131, formant un ensemble de recouvrement plus simple et plus fiable qu'un système de clapet.

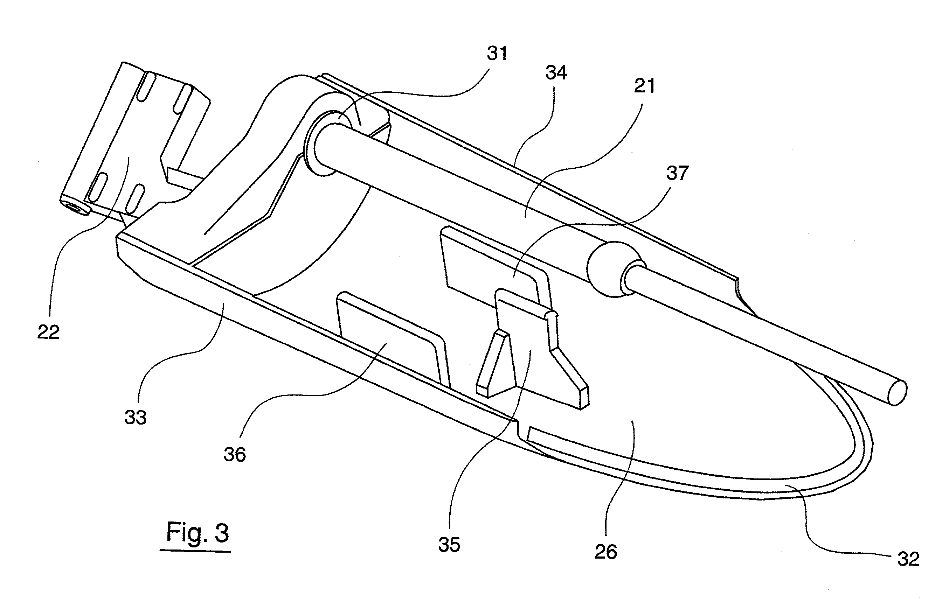

Les enjoliveurs peuvent avoir de nombreuses formes, en fonction des besoins. La figure 3 illustre un exemple avantageux d'un tel enjoliveur coulissant, vu de dessous.

Il présente tout d'abord une ouverture 31, permettant le passage de l'embout 21.

A l'autre extrémité, de forme arrondie, on a prévu une lèvre 32 en matière souple, pour assurer un contact efficace avec l'enjoliveur principal 131 (voir également figure 2), en évitant les risques de rayure sur ce dernier. D'autres patins de contact, de forme ou de matériau différents peuvent bien sûr être prévus.

L'enjoliveur coulissant présente également des rebords 33 et 34, qui permettent de dissimuler le mécanisme, et avantageusement de masquer les jeux de fonctionnement. Dans ce dernier cas, il s'agit de rebords souples, qui viennent en contrainte sur la partie fixe 13.

Afin d'assurer un guidage en translation efficace entre les parties fixes et mobiles du système d'enjoliveurs, des moyens de guidage sont préférentiellement prévus. On peut ainsi prévoir un ergot 35, qui viendra coulisser dans une fente 41 prévue à cet effet dans la partie fixe 13. La forme et le fonctionnement de cet ergot sont décrits plus en détail par la suite.

On distingue enfin deux éléments d'appui 36 et 37 qui viennent prendre position sur l'enjoliveur 131 de la barre de tirage.

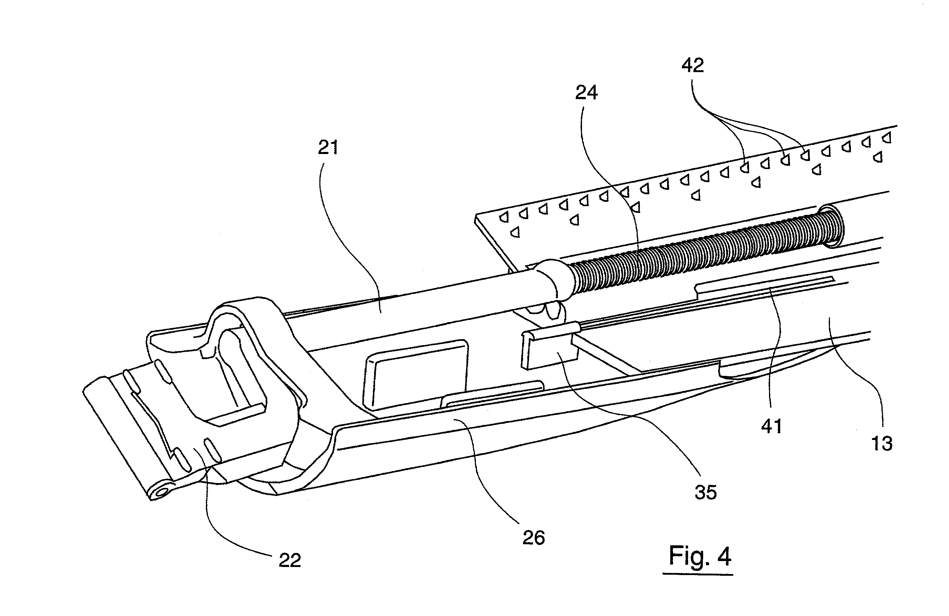

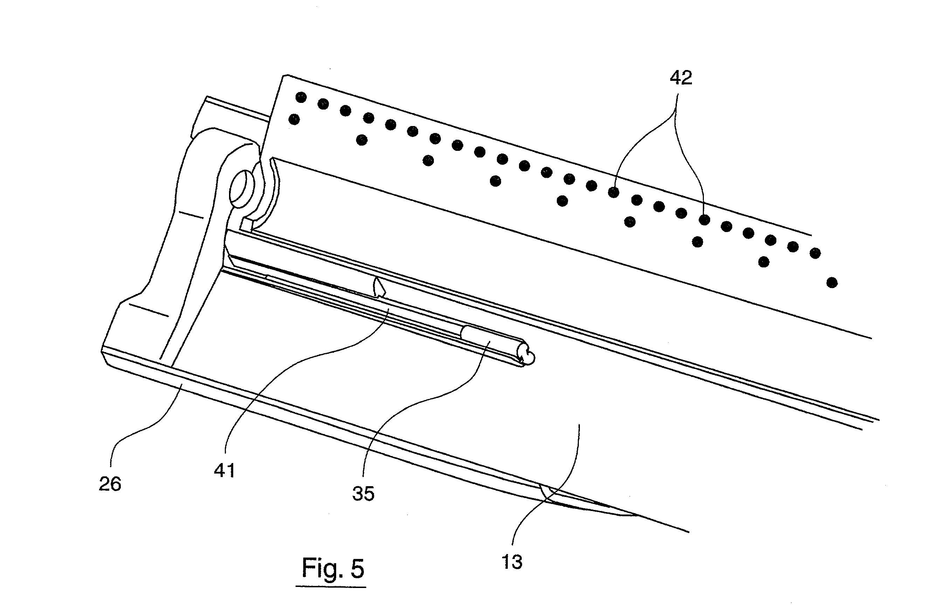

Comme on le voit sur la figure 4, l'ergot 35 vient s'engager dans une fente 41 de la barre de tirage. Sur cette figure, l'élément coulissant muni de son enjoliveur est en cours de montage. Sur la figure 5, on voit les mêmes éléments dans la position correspondant à un store déployé, l'enjoliveur 26 chevauchant complètement la barre de tirage 13 (position illustrée également par la figure 2). Dans ce cas, l'ergot 31 est en butée de la fente 41.

On remarquera par ailleurs les petits picots 42 formés sous l'enjoliveur, pour permettre un bon contact avec la tablette.

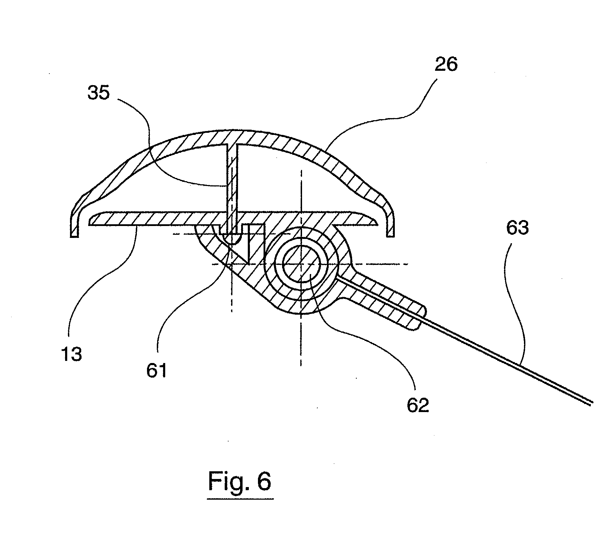

Ainsi que cela apparaît clairement sur la section en coupe de la figure 6, on note que l'ergot 35 se termine par un renflement 61, plus large que la fente 41, de façon à empêcher le soulèvement de l'enjoliveur 26. L'ergot 35 permet ainsi de contrôler parfaitement le coulissement dans une seule direction, empêchant tout déplacement dans les autres directions perpendiculaires.

L'élément de tirage 62 proprement dit, relié à la toile 63,est solidaire de l'enjoliveur principal 13. Il pourrait également être articulé par rapport à ce dernier, de façon à faire varier la position de cet enjoliveur, notamment lorsque le store est déployé.

Il convient de noter que l'invention n'est bien sûr pas limitée à ce mode de réalisation qui vient d'être décrit. Notamment, les enjoliveurs peuvent avoir des formes différentes, en fonction des besoins, et les moyens de guidage peuvent également être modifiés. Par exemple, plusieurs fentes parallèles peuvent être prévues, la fente peut être réalisée sur l'enjoliveur, l'ergot étant alors formé sur la barre de tirage, où le guidage peut être assuré uniquement par les rebords 33 et 34, qui peuvent le cas échéant revenir légèrement vers l'intérieur.

Par ailleurs, la forme de la toile n'est pas forcément un trapèze symétrique. Il est clair que le même principe peut être appliqué dans tous les cas où les rails sont non parallèles (par exemple pour des vitres de portières latérales). Notamment, dans le cas où la vitre et/ou la toile définissent un trapèze rectangle, on peut prévoir un unique enjoliveur coulissant.

Les rails de guidage peuvent également être rectilignes ou courbes.

## Revendications

1. Store présentant une barre de tirage guidée dans deux rails non parallèles et permettant l'enroulement et le déroulement d'un écran d'occultation, ladite barre de tirage comprenant au moins un élément coulissant, de façon à compenser la variation de l'écartement entre lesdits rails,
**caractérisé en ce que** chacun desdits éléments coulissants porte un enjoliveur monté fixe par rapport audit élément coulissant, coopérant avec un enjoliveur principal monté sur ladite barre de tirage pour recouvrir une fente de passage dudit écran d'occultation, lorsque celui-ci est en position repliée; et s'étendant au moins partiellement au dessus de ladite barre de tirage, en position déployée.

2. Store selon la revendication 1, **caractérisé en ce que** chacun desdits éléments coulissants comprend des premiers moyens de guidage en translation coopérant avec des seconds moyens de guidage prévus sur ladite barre de tirage ou sur ledit enjoliveur principal.

3. Store selon la revendication 2, **caractérisé en ce que** lesdits premiers, respectivement seconds, moyens de guidage comprennent au moins un ergot, et **en ce que** lesdits seconds, respectivement premiers, moyens de guidage comprennent au moins une fente dans laquelle circule au moins un desdits ergots.

4. Store selon la revendication 3, **caractérisé en ce qu'**au moins un desdits ergots comprend au moins un élément anti-soulèvement, empêchant ledit ergot de sortir de la fente dans laquelle il circule.

5. Store selon la revendication 4, **caractérisé en ce que** l'extrémité dudit ergot présente un renflement de largeur supérieure à la largeur de ladite fente.

6. Store selon l'une quelconque des revendications 1 à 5, **caractérisé en ce que** le ou lesdits enjoliveurs coulissants sont clipsés sur ledit élément coulissant.

7. Store selon l'une quelconque des revendications 1 à 6, **caractérisé en ce que** le ou lesdits enjoliveurs coulissants présentent une surface principale de recouvrement sensiblement parallèle à ladite barre de tirage et, sur au moins une partie de la périphérie de ladite surface principale, un rebord sensiblement perpendiculaire à ladite surface principale.

8. Store selon l'une quelconque des revendications 1 à 7, **caractérisé en ce que** le ou lesdits enjoliveurs coulissants portent au moins un élément de contact venant s'interposer entre le corps dudit enjoliveur coulissant et ledit enjoliveur principal.

9. Store selon la revendication 8, **caractérisé en ce qu'**au moins un desdits éléments de contact est une lèvre réalisée en matériau souple.

10. Store selon l'une quelconque des revendications 8 et 9, **caractérisé en ce que** le ou lesdits éléments de contact s'étendent au moins au voisinage de la partie de l'enjoliveur la plus éloignée du rail correspondant.

11. Véhicule automobile comprenant au moins un store présentant une barre de tirage guidée dans deux rails non parallèles et permettant l'enroulement et le déroulement d'un écran d'occultation, ladite barre de tirage comprenant au moins un élément coulissant, de façon à compenser la variation de l'écartement entre lesdits rails,
**caractérisé en ce que** chacun desdits éléments coulissants porte un enjoliveur monté fixe par rapport audit élément coulissant, coopérant avec un enjoliveur principal monté sur ladite barre de tirage pour recouvrir une fente de passage dudit écran d'occultation, lorsque celui-ci est en position repliée, et s'étendant au moins partiellement au dessus de ladite barre de tirage, en position déployée.

12. Véhicule automobile selon la revendication 11, **caractérisé en ce que** ledit store est destiné à occulter une vitre arrière.
